(19)

Europäisches
Patentamt
European
Patent Office
Office européen
des brevets

(11) **EP 4 629 011 A1**

(12) **EUROPEAN PATENT APPLICATION**
published in accordance with Art. 153(4) EPC

(43) Date of publication:
**08.10.2025 Bulletin 2025/41**

(21) Application number: **23893417.8**

(22) Date of filing: **26.09.2023**

(51) International Patent Classification (IPC):
**G05D 1/20** (2024.01)          **A62C 3/02** (2006.01)
**A62C 37/50** (2006.01)

(52) Cooperative Patent Classification (CPC):
**A62C 3/02; A62C 37/50;** Y02A 40/28

(86) International application number:
**PCT/CN2023/121450**

(87) International publication number:
**WO 2024/109325 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022   CN 202211490775**

(71) Applicant: **Autoflight (Kunshan) Co., Ltd.
Suzhou, Jiangsu 215345 (CN)**

(72) Inventors:
• TIAN, Yu
  **Suzhou, Jiangsu 215345 (CN)**
• YUAN, Keyan
  **Suzhou, Jiangsu 215345 (CN)**
• ZHENG, Lingxiang
  **Suzhou, Jiangsu 215345 (CN)**
• SHI, Junjie
  **Suzhou, Jiangsu 215345 (CN)**

(74) Representative: **MERH-IP Matias Erny Reichl
Hoffmann
Patentanwälte PartG mbB
Paul-Heyse-Straße 29
80336 München (DE)**

(54) **FIRE EXTINGUISHING METHOD AND APPARATUS, AND DEVICE AND STORAGE MEDIUM**

(57)     The present invention belongs to the field of unmanned aerial vehicles, specifically relates to a fire extinguishing method, device, equipment and storage medium. The program includes: obtaining the monitored area of the area to be monitored; According to the monitoring area, the target flight mode of the monitoring drone is determined, and the target flight mode includes a mobile flight mode or a hovering flight mode; control the monitoring drone to monitor the area to be monitored in the target flight mode to obtain the alarm information sent by the monitoring drone, and the alarm information is used to indicate that the monitoring temperature of the target area is higher than the temperature threshold; According to the location information of the target area, the fire extinguishing drone is controlled to sail to the target area for fire extinguishing treatment. The present invention can realize that in a wide and remote forest area, fire extinguishing warning and/or fire extinguishing treatment can still be carried out efficiently.

Fig. 1

## Description

FIELD OF THE DISCLOSURE

The present invention relates to the field of unmanned aerial vehicles, in particular to a fire extinguishing method, a device, an equipment and a storage medium.

BACKGROUND OF THE INVENTION

With the continuous deterioration of the natural environment, people gradually realize the importance of forests, afforestation and forest protection have become hot topics, among which fire prevention and fire treatment in forest areas are becoming more and more important.

Among the related technologies, when extinguishing fires in forest areas, watchtowers are mainly established in forest areas, and relevant personnel monitor forest areas through cameras and other devices on watchtowers, and carry out fire extinguishing warnings and/or fire extinguishing treatment when detecting fires in forest areas. However, this method is not suitable for large and remote forest areas and consumes a lot of manpower.

SUMMARY OF THE INVENTION

The present invention provides a fire extinguishing method, device, equipment and storage medium, which can realize that in a wide and remote forest area, still can be efficiently fire extinguishing warning and/or fire extinguishing treatment.

First, the present invention provides a fire extinguishing method, comprising: obtaining the monitoring area of the area to be monitored; According to the monitoring area, determine the target flight mode of the monitoring drone, the target flight mode includes mobile flight mode or hover flight mode; The control monitoring drone monitors the monitoring area in the target flight mode to obtain the alarm information sent by the monitoring drone, and the alarm information is used to indicate that the monitoring temperature of the target area is higher than the temperature threshold; According to the location information of the target area, the fire extinguishing drone is controlled to sail to the target area for fire extinguishing treatment.

In one possible embodiment, according to the monitoring area, the target flight mode of the monitoring drone is determined, comprising: if the monitoring area is greater than or equal to the set value, the target flight mode is determined to be a mobile flight mode; If the monitoring area is less than the set value, the target flight mode is determined to be hover.

In one possible embodiment, the target flight mode is hovering flight mode, the monitoring drone in hover flight mode is plurality, and the control monitoring drone monitors the monitoring area in the target flight mode, comprising: obtaining the monitoring radius of the monitorable range of a plurality of monitoring drones; According to the monitoring radius, determine the hover position of multiple monitoring drones; According to the hover position, multiple monitoring drones are controlled to form a target array so that multiple monitoring drones can monitor the monitoring area.

In one possible embodiment, the fire extinguishing drone is controlled to sail to the target area for fire extinguishing treatment, including: if the area of the target area is greater than or equal to the area threshold, the fire extinguishing route of the fire extinguishing drone in the target area is determined; Control the fire extinguishing drone to extinguish the target area according to the fire extinguishing route; If the area of the target area is less than the area threshold, the control fire extinguishing drone hovers at a fixed point at a preset height to put fire extinguishing materials on the target area.

In one possible embodiment, the fire extinguishing drone is controlled to extinguish the target area according to the fire extinguishing route, including: obtaining the height of the fire extinguishing drone relative to the ground, the movement speed of the fire extinguishing drone relative to the ground, the current wind speed, and the fire extinguishing radius of the effective fire extinguishing range of the fire extinguishing drone; According to the height, moving speed and current wind speed, determine the placement of the fire extinguishing object; According to the fire extinguishing radius and moving speed, determine the time interval of the fire extinguishing object; According to the fire extinguishing route, delivery location and delivery interval, control the fire extinguishing drone to extinguish the target area.

In one possible embodiment, the fire extinguishing drone detects the remaining amount of fire extinguishing material during the fire extinguishing process; If the remaining amount is less than the preset value, the material supply point will be returned according to the target route to replenish the fire extinguishing materials.

In one possible embodiment, the control of the fire extinguishing drone to the target area for fire extinguishing treatment, including: the control of the fire extinguishing drone to put the rain agent carried into the cloud of the target area to extinguish the target area through cloud rainfall.

In one possible embodiment, after controlling the fire extinguishing drone to sail to the target area for fire extinguishing treatment, it further includes: controlling the fire extinguishing drone to monitor whether there is a fire source residue in the target area; If there is a fire source residue in the target area, the fire extinguishing drone will be controlled to carry out fixed-point fire extinguishing treatment on the area where the fire source remains.

In a second aspect, the present invention provides a fire extinguishing device, comprising: an acquisition module for obtaining the monitoring area of the area to be monitored; Determination module, which is used to determine the target flight mode of the monitoring UAV, depending on the monitoring area, the target flight mode includes mobile flight mode or hover flight mode; The monitoring module is used to control the monitoring UAV to monitor the monitoring area in the target flight mode to obtain the alarm information sent by the monitoring UAV, and the alarm information is used to indicate that the monitoring temperature of the target area is higher than the temperature threshold; The fire extinguishing module is used to control the fire extinguishing drone to sail to the target area for fire extinguishing treatment according to the location information of the target area.

Thirdly, the present invention provides an electronic device, comprising: a processor, and a memory connected to the processor communication; Memory stores computer execution instructions; The processor executes the computer execution instructions stored in memory to achieve the first aspect of the fire extinguishing method.

Fourth, the present invention provides a computer-readable storage medium, the computer-readable storage medium stores computer execution instructions, the computer execution instructions are executed by the processor for achieving a fire extinguishing method such as the first aspect.

Fifth, an embodiment of the present invention provides a computer program product, including a computer program, a first aspect of the fire extinguishing method when the computer program is executed by the processor.

The fire extinguishing method, device, equipment and storage medium provided by the present invention, by determining the size of the area to be monitored to determine whether the flight mode of the monitoring drone is a mobile flight mode or a hover flight mode, so as to improve the efficiency of monitoring the monitoring area, and when the monitoring drone finds a fire in the area to be monitored, the monitoring drone can immediately feedback the location information of the fire, so as to facilitate the fire extinguishing drone to sail to the fire occurrence point for fire extinguishing treatment, therefore, The technical solution of the present invention can be efficiently extinguished early warning and / or fire extinguishing treatment in the monitoring area without setting a watchtower, so that the technical solution of the present invention can be applied to a wide and remote forest area, and does not need to consume excessive manpower.

BRIEF DESCRIPTION OF DRAWINGS

The drawings herein are incorporated into the specification and form part of the present specification, illustrating embodiments conforming to the present invention, and together with the description are used to explain the principles of the present invention.

FIG. 1 is a schematic diagram of the structure of the fire extinguishing system provided by an embodiment of the present invention;

FIG. 2 is a flow chart of Example 1 of the fire extinguishing method provided by an embodiment of the present invention;

FIG. 3 is a schematic diagram of a monitoring drone monitoring fire provided by an embodiment of the present invention;

FIG. 4 is a schematic diagram of another monitoring drone monitoring fire provided by an embodiment of the present invention;

FIG. 5 is a schematic diagram of another monitoring drone monitoring fire provided in an embodiment of the present invention;

FIG. 6 is a schematic diagram of a fire extinguishing drone provided by an embodiment of the present invention;

FIG. 7 is a schematic diagram of another fire extinguishing drone provided by an embodiment of the present invention;

FIG. 8 is a schematic diagram of another fire extinguishing drone provided in an embodiment of the present invention;

FIG. 9 is a flow chart of Example II of the fire extinguishing method provided by an embodiment of the present invention;

FIG. 10 is a schematic view of the structure of the fire extinguishing device provided by an embodiment of the present invention;

FIG. 11 is a schematic diagram of the structure of an electronic device provided by an embodiment of the present invention.

By means of the above drawings, clear embodiments of the present invention have been shown, which will be described in more detail below. These drawings and textual descriptions are not intended to limit the scope of the present invention idea by any means, but to illustrate the concept of the present invention by reference to a particular embodiment for those skilled in the art, for those skilled in the art, without paying creative labor, may also obtain other drawings according to these drawings.

DETAILED DESCRIPTION

Exemplary embodiments will be described in detail herein, the examples of which are represented in the accompanying drawings. When the following description relates to drawings, the same numbers in different drawings represent the same or similar features, unless otherwise indicated. The embodiments described in the following exemplifications do not represent all embodiments consistent with the present invention. Rather, they are only examples of devices and methods consistent with some aspects of the present invention as detailed in the attached claims.

First, explain the terms involved in this invention:

Multicopter: refers to a rotorcraft with more than 3 axes, which adjusts the pull and torque through the relative rotation speed between the propellers, and controls the aircraft to hover, rotate or fly on a course.

Fixed wing: refers to a heavier-than-air aircraft that flies in the atmosphere by generating forward thrust or pull force by the power plant, and lift generated by the fixed wing of the fuselage. Fixed-wing drones have fast speed and long range, which is suitable for surveying and mapping and large-scale shooting.

Video gimbal: A device that carries the camera device to rotate horizontally and vertically, enabling the camera device to take pictures from multiple angles.

Among the relevant technologies provided in Background Technology, there are at least the following technical issues:

For fire prevention and fire treatment in forest areas, it is usually achieved by establishing watchtowers, satellite monitoring and navigation helicopters, but such fire prevention measures have many defects: watchtowers not only need to establish supporting living facilities, but also need corresponding video surveillance technology (for example, installing cameras), which lacks corresponding equipment conditions in vast and remote forest areas; Monitoring the fire situation by satellite has low spatial resolution and limited recognition accuracy. The limited number of general aviation helicopters cannot carry out regular aerial patrols covering a large area, lack of rapid real-time situation and catastrophe awareness capabilities, and need to be exhausted in sporadic forest fires, and also require a lot of manpower.

In view of the problems in related technologies, the present invention proposes a fire extinguishing method, through the area to be monitored to adapt the corresponding monitoring UAV, if the area to be monitored is large, the monitoring UAV adopts mobile flight mode for monitoring, if the area of the area to be monitored is small, the monitoring UAV adopts hover flight mode for monitoring, so as to improve the efficiency of monitoring the area to be monitored; And when the monitoring drone finds a fire in the area to be monitored, the monitoring drone can immediately feedback the location information of the fire, so that the fire extinguishing drone can sail to the fire occurrence point for fire extinguishing treatment; In addition, if the area of the fire occurrence area is large, the fire extinguishing drone uses the method of putting fire extinguishing materials along the way to extinguish the fire, and if the area of the fire occurrence area is small, the fire extinguishing drone uses fixed-point hovering to extinguish the fire, which can improve the fire extinguishing efficiency. Therefore, the technical solution of the present invention can be efficiently extinguished early warning and / or fire extinguishing treatment in the monitoring area without setting a watchtower, so that the technical solution of the present invention can be applied to a wide and remote forest area, without consuming excessive manpower, and is also suitable for other areas that require fire extinguishing warning and / or fire extinguishing treatment.

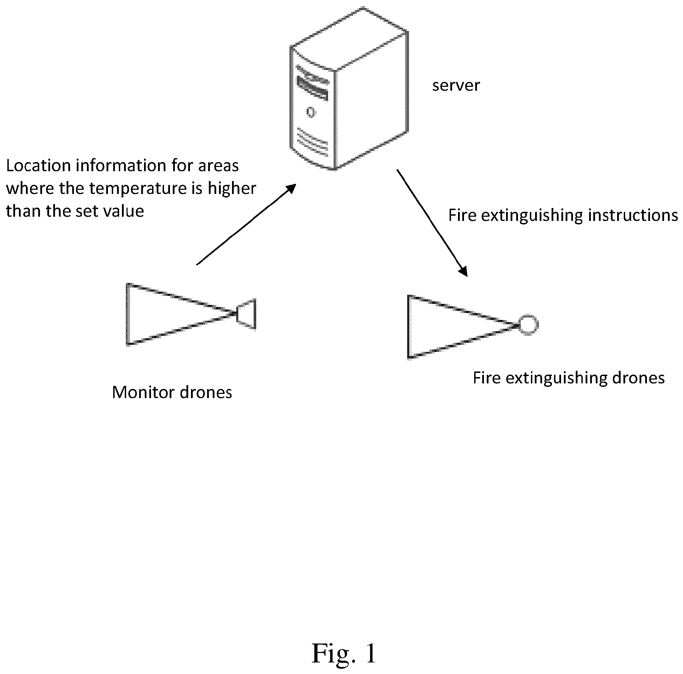

In one embodiment, the fire extinguishing method may be applied in one application scenario. FIG. 1 is a schematic view of the structure of the fire extinguishing system provided by an embodiment of the present invention. As shown in FIG. 1, the fire extinguishing system may include a server, a monitoring drone and a fire extinguishing drone.

In this scenario, when it is necessary to monitor the fire situation in the monitored area, the server can first determine the flight mode of the monitoring drone according to the area to be monitored, determine the flight mode of the monitoring drone as mobile flight mode for the large area to be monitored, and determine the flight mode of the monitoring drone as hover flight mode for the area to be monitored with a small area, which can improve the efficiency of monitoring the monitoring area. The server can send monitoring instructions to the monitoring drone, so that the monitoring drone can adjust the flight mode to monitor the fire situation in the monitored area.

In this scenario, if the monitoring drone detects an area where the temperature is higher than the set value in the area to be monitored, it can be determined that a fire may have occurred in the area, so the monitoring drone can send the location information of the area to the server, and the server can send fire extinguishing instructions to the fire extinguishing drone according to the location information, so that the fire extinguishing drone can navigate to the area where the fire occurs according to the location information to extinguish the fire in the area.

Combined with the above scenarios, the following specific embodiments of the technical solution of the present invention and how the technical solution of the present invention to solve the above technical problems are described in detail. The following specific embodiments may be combined with each other, and the same or similar concepts or processes may not be repeated in certain embodiments. The embodiments of the present invention will be described below in conjunction with the accompanying drawings.

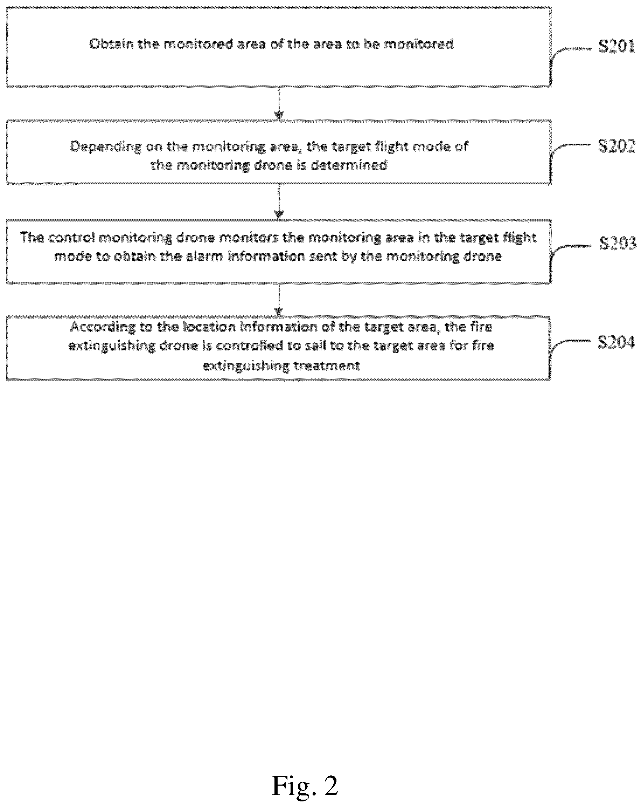

The present invention provides a method of extinguishing fire. FIG. 2 is a flowchart of embodiment 1 of the fire extinguishing method provided by an embodiment of the present invention. As shown in FIG. 2, the method comprises the following steps:

S201: Acquisition of the monitored area of the area to be monitored.

In this step, the area to be monitored, that is, the monitoring area, according to the actual demand can include a large area to be monitored area and a small area to be monitored, for different monitoring areas to be monitored, can be monitored by monitoring drones with different flight modes, so as to improve the efficiency of monitoring the monitoring area.

S202: Depending on the monitoring area, determine the target flight mode of the monitoring UAV.

In this step, the target airplane mode includes either mobile airplane mode or hover airplane mode.

Specifically, the monitoring drone can have two flight modes, that is, mobile flight mode and/or hover flight mode, the monitoring drone in the mobile flight mode, according to the specific route to the monitoring area for flat sweep monitoring, usually the monitoring area to be monitored with a large monitoring area; In hover flight mode, the monitoring drone can hover at a specific location in the area to be monitored, and then monitor the fire situation in the area to be monitored below, usually the area to be monitored with a small monitoring area.

S203: Control monitoring UAV to monitor the monitoring area in target flight mode to obtain the alarm information sent by the monitoring UAV.

In this step, an alarm message is used to indicate that the monitored temperature of the target area is above the temperature threshold.

Specifically, when it is determined that the monitoring drone uses the target flight mode to detect the monitoring area, if the monitoring drone detects the target area in the area to be monitored, it can determine that a fire has occurred in the target area, so the monitoring drone can send alarm information to the ground monitoring center (that is, the server), which carries the location information of the target area.

Optionally, the ground monitoring center can send monitoring instructions to the monitoring drone, which can carry the target flight mode of the monitoring drone, the location information of the area to be monitored, and the route or hovering point to be monitored in the monitoring area, so that the monitoring drone can monitor the monitoring area, so as to timely detect the fire in the area to be monitored.

Optionally, the monitoring drone can monitor the monitored area through infrared cameras and/or camera gimbal to determine whether there is a target area in the area to be monitored where the monitoring temperature is above the temperature threshold.

S204: According to the location information of the target area, control the fire extinguishing drone to sail to the target area for fire extinguishing treatment.

In this step, after the monitoring drone finds the target area and sends an alarm message to the ground monitoring center, in order to avoid conflicts with the route of the firefighting drone, it can return home by ascending. After obtaining the location information of the target area, the ground monitoring center can control the fire extinguishing drone to sail to the target area for fire extinguishing treatment.

Optionally, the ground monitoring center can send fire extinguishing instructions to the fire extinguishing drone, which can carry the location information of the target area and the fire extinguishing route.

Optionally, surveillance drones and firefighting drones can be vertical take-off and landing (VTOL) drones.

The fire extinguishing method provided in the present embodiment, by determining the size of the area to be monitored to determine whether the flight mode of the monitoring drone is a mobile flight mode or a hover flight mode, so as to improve the efficiency of monitoring the monitoring area, and when the monitoring drone finds a fire in the area to be monitored, the monitoring drone can immediately feedback the location information of the fire occurrence, so that the fire extinguishing drone can sail to the fire occurrence point for fire extinguishing treatment, therefore, The technical solution of the present invention can be efficiently extinguished early warning and / or fire extinguishing treatment in the monitoring area without setting a watchtower, so that the technical solution of the present invention can be applied to a wide and remote forest area, and does not need to consume excessive manpower.

In one embodiment, according to the monitoring area, the target flight mode of the monitoring drone is determined, comprising: if the monitoring area is greater than or equal to the set value, the target flight mode is determined to be a mobile flight mode; If the monitoring area is less than the set value, the target flight mode is determined to be hover.

In this scheme, if the monitoring area of the area to be monitored is greater than or equal to the set value, in order to effectively improve the monitoring efficiency, the mobile flight mode can be adopted, that is, the monitoring drone flies in fixed-wing mode; If the monitoring area of the area to be monitored is less than the set value, in order to improve the timeliness of monitoring the monitoring area, the hover flight mode can be used, that is, the monitoring drone flies in multi-rotor mode.

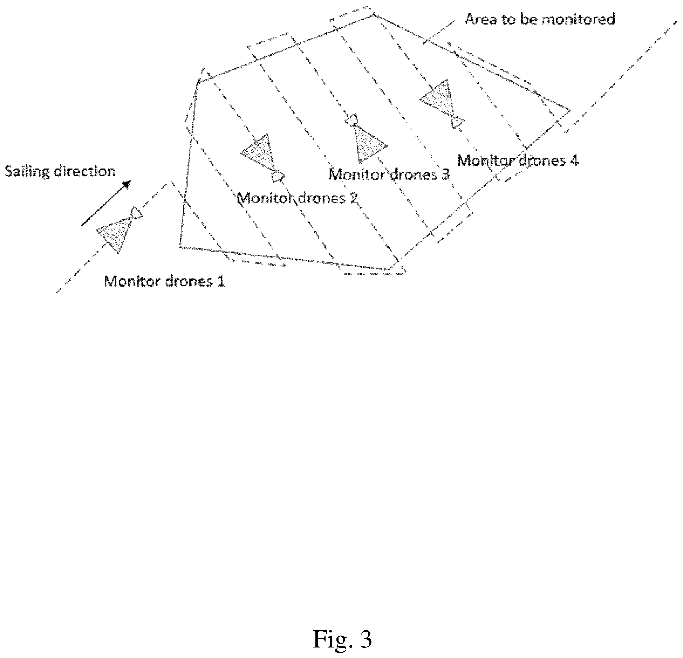

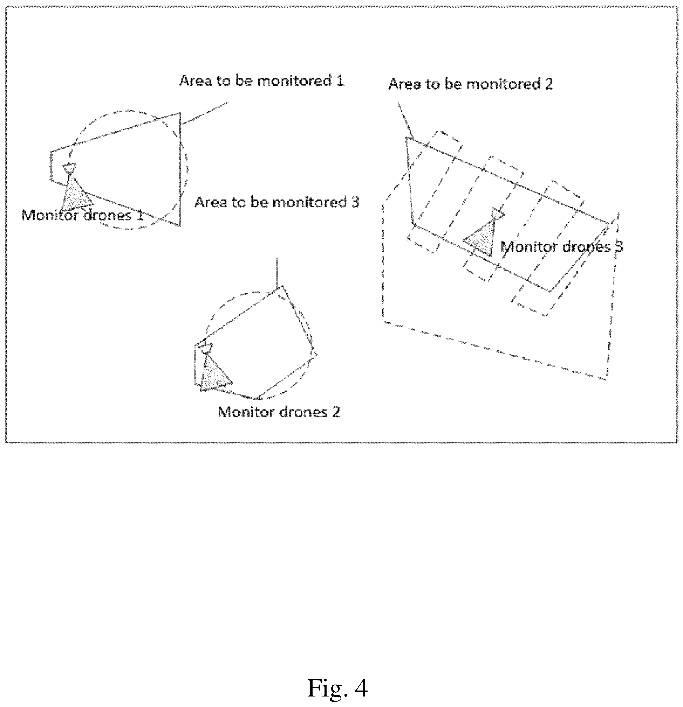

Specifically, the monitoring drone can use the fixed-wing mode to carry out large-scale high-speed horizontal sweeping of the monitoring area according to the pre-set mapping route or hand-drawn route, so as to achieve the purpose of monitoring the monitoring area with high efficiency and large monitoring area, and the monitoring UAV uses fixed-wing mode to fly with low energy consumption, which is suitable for ground patrol cannot be monitored or inaccessible areas. There are two ways, as shown in Figure 3 and Figure 4.

FIG. 3 is a schematic diagram of a monitoring drone monitoring fire provided by an embodiment of the present invention. In FIG. 3, the area to be monitored is complete and the area is large, therefore, a plurality of monitoring drones can be used at the same time (in FIG. 3 as shown in monitoring UAV 1, monitoring UAV 2, monitoring UAV 3 and monitoring UAV 4) to be detected in the same route to the monitoring area, to avoid only monitoring the area to be monitored by one monitoring UAV, can not find the fire in the area that has been navigated, and, Each monitoring drone can obtain each other's position information, waypoint completion information, and ground fire monitoring information in real time, so as to ensure the overall orderly and safe flight.

FIG. 4 is a schematic diagram of another monitoring drone monitoring fire provided by an embodiment of the present invention. In FIG. 4, there are a plurality of areas to be monitored in a certain area (as shown in FIG. 4 area to be monitored area 1, area to be monitored 2 and area to be monitored 3) each area is small relative to the area to be monitored in FIG. 3, and the area is relatively scattered, therefore, a monitoring drone (as shown in the monitoring drone 1, monitoring drone 2 and monitoring drone 3 in FIG. 4) can be deployed for each area (as shown in the monitoring drone 1, monitoring drone 2 and monitoring drone 3) in FIG. 4, In this way, during the monitoring process, any fire in the area will be detected by the monitoring drones deployed in the area and fed back to the ground monitoring center.

In one embodiment, the target flight mode is hovering flight mode, the monitoring drone in hover flight mode is plurality, and the control monitoring drone monitors the monitoring area in the target flight mode, comprising: obtaining the monitoring radius of the monitorable range of a plurality of monitoring drones; According to the monitoring radius, determine the hover position of multiple monitoring drones; According to the hover position, multiple monitoring drones are controlled to form a target array so that multiple monitoring drones can monitor the monitoring area.

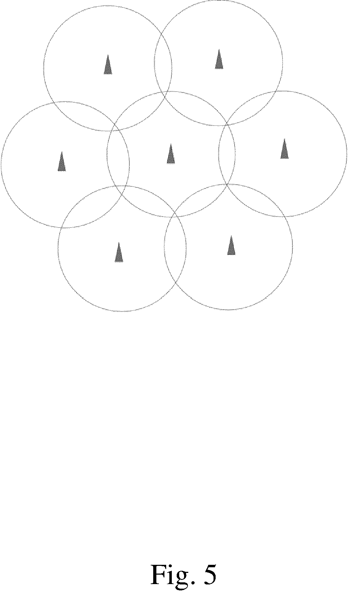

In this scheme, for the monitoring area less than the set value of the area to be monitored, in order to improve the timeliness of monitoring the monitoring area, the monitoring drone can hover at a fixed point at the designated position of the area to be monitored, and conduct real-time fire monitoring in the area to be monitored directly below, once the fire is found, it can immediately send alarm information to the ground monitoring center, and the designated location of the area to be monitored can be manually set by operators. Multiple surveillance drones can be used to monitor the monitored area, as shown in Figure 5.

FIG. 5 is a schematic diagram of another monitoring drone monitoring fire provided by an embodiment of the present invention, in FIG. 5, a plurality of monitoring drones can be hovered at a fixed point at high altitude respectively to form a UAV fire monitoring array to achieve complete monitoring of the monitoring area. According to the monitoring radius of each monitoring drone's own monitoring range and the distance between multiple monitoring drones, multiple monitoring drones can be formed into a honeycomb-like array to maximize the monitoring range. When a fire is detected, the monitoring drone will sequentially raise and switch to fixed-wing mode for return to make room for fire extinguishing drones carrying extinguishing agents or fire extinguishing bombs to enter the area for fire extinguishing treatment.

In one embodiment, in a particular scenario, if the number of monitoring drones is small, it can also be monitored by the operator for targeted fixed-point assignment, for example, the monitoring efficiency of the area to be monitored with a watchtower can be greatly improved.

When the staff of the watchtower observe the possibility of fire in the target area, they can directly send the monitoring drone to the target area for detection, if there is no safety hazard in the target area, the monitoring drone can return to continue to standby, if there is a fire hazard or fire in the target area, the monitoring drone can directly use the random fire extinguishing equipment to extinguish the fire, and the subsequent ground monitoring center can continue to dispatch the monitoring drone for operation according to the actual situation.

In one embodiment, the fire extinguishing drone is controlled to sail to the target area for fire extinguishing treatment, comprising: if the area of the target area is greater than or equal to the area threshold, the fire extinguishing route of the fire extinguishing drone in the target area is determined; Control the fire extinguishing drone to extinguish the target area according to the fire extinguishing route; If the area of the target area is less than the area threshold, the control fire extinguishing drone hovers at a fixed point at a preset height to put fire extinguishing materials on the target area.

In this scheme, the ground monitoring center can determine the area of the target area according to the alarm information returned by the monitoring drone, so as to determine the fire extinguishing mode of the fire extinguishing drone. For the target area where the area is greater than or equal to the preset area threshold, the fire extinguishing mode of the fire-extinguishing UAV is determined to release fire-extinguishing materials along the fire-extinguishing route according to the fire-extinguishing route; For the target area where the area is less than the area threshold, the fire extinguishing mode of the fire extinguishing UAV is determined to be fixed-point fire extinguishing.

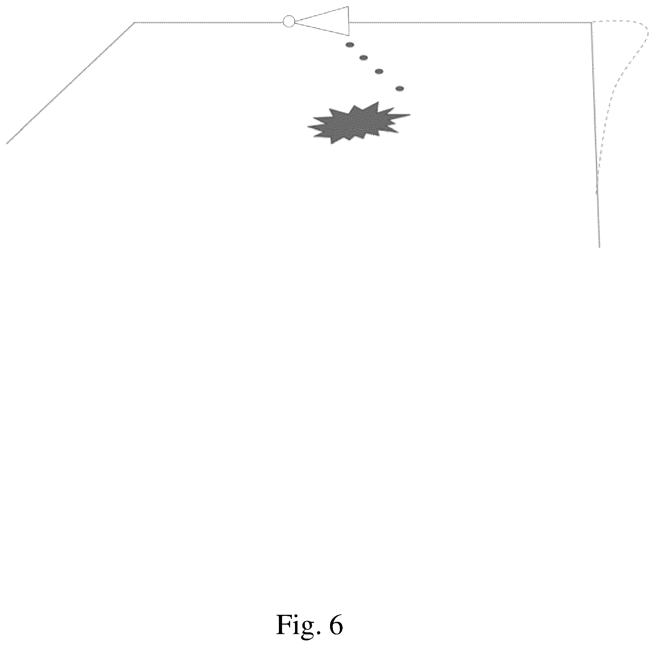

Specifically, if the area of the target area is greater than or equal to the area threshold, after sailing to the target area, the fire extinguishing drone may cut into the route in the manner of its route according to the predetermined fire extinguishing route, as shown in FIG. 6. FIG. 6 is a schematic diagram of a fire extinguishing drone provided by an embodiment of the present invention. In FIG. 6, the fire extinguishing drone may release fire extinguishing materials to the target area multiple times according to the fire extinguishing route to achieve the purpose of completely extinguishing the target area. Optionally, the extinguishing route can be drawn by the operator based on the on-site situation in the target area, or it can be automatically generated by the server based on the fire situation in the target area.

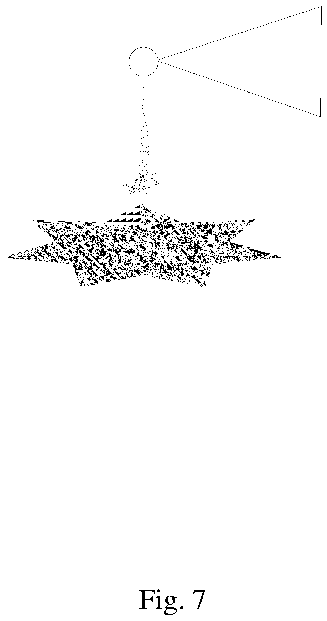

Specifically, if the area of the target area is less than the area threshold, the fire extinguishing drone can hover at the lowest altitude that can ensure the safety of the aircraft after sailing to the target area, so as to release the fire extinguishing object to the target area in the hovering position to achieve fire extinguishing, as shown in Figure 7. FIG. 7 is a schematic diagram of another fire extinguishing drone provided by an embodiment of the present invention. In FIG. 7, after hovering in the target area, the fire extinguishing drone can directly put the fire extinguishing object into the target area through the fire extinguishing agent nozzle, at this time, the fire extinguishing drone can be multi-rotor mode, so as to improve the control accuracy of the fire extinguishing drone to achieve accurate fire suppression in the bud. Optionally, the location of the firefighting drone can be the location detected by its own sensors, or it can be specified by the server or operator.

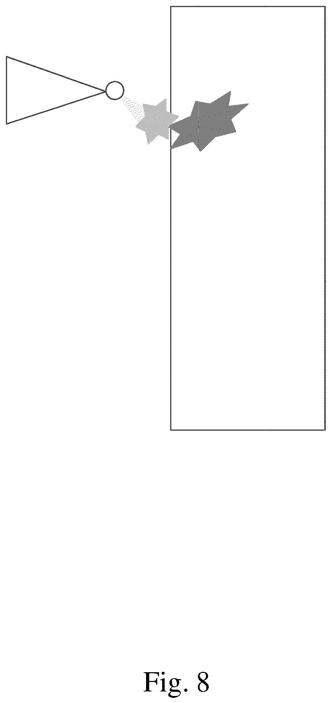

Optionally, the fire extinguishing drone in the fixed-point fire extinguishing mode, can also be applied to the urban high-rise fire extinguishing scene, as shown in FIG. 8. FIG. 8 is another fire extinguishing drone fire extinguishing diagram provided by the embodiment of the present invention. In FIG. 8, the nozzle of the fire extinguishing drone can be a movable nozzle, the amplitude of action to the fuselage Z axis straight down to 0 degrees, the nose direction is horizontally pointed and 90 degrees adjustable, can fully respond to various fire extinguishing situations.

Optionally, the extinguishing object may be a fire extinguishing agent or a fire extinguishing bomb, or a combination of a fire extinguishing agent and a fire extinguishing bomb, or other substances that can be used to extinguish the fire.

In one embodiment, the control of the fire extinguishing drone according to the fire extinguishing route to the target area of the fire extinguishing treatment, comprising: obtaining the height of the fire extinguishing drone relative to the ground, the movement speed of the fire extinguishing drone relative to the ground, the current wind speed, and the fire extinguishing radius of the effective fire extinguishing range of the fire extinguishing drone; According to the height, moving speed and current wind speed, determine the placement of the fire extinguishing object; According to the fire extinguishing radius and moving speed, determine the time interval of the fire extinguishing object; According to the fire extinguishing route, delivery location and delivery interval, control the fire extinguishing drone to extinguish the target area.

In this scheme, the fire extinguishing mode of the fire extinguishing drone is to determine the placement location of the fire extinguishing object according to the height of the fire extinguishing drone relative to the ground, the movement speed of the fire extinguishing drone relative to the ground and the current wind speed when the fire extinguishing vehicle is released along the fire extinguishing route. It can be expressed by the following formula:

$$S = (V + V_A) * \sqrt{2h/g}$$

Among them, S can be used to represent the position diameter between the actual landing point position of the fire extinguishing object and the position of the drop instant fire extinguishing drone relative to the ground projection position, V can be used to represent the movement speed of the fire extinguishing drone relative to the ground, $V_A$ can be used to indicate the current wind speed, h can be used to represent the height of the fire extinguishing drone relative to the ground, and g can be used to represent the gravitational acceleration. The wind speed remains unchanged during the time period between the default fire extinguishing material release time and the landing time.

In the above scheme, the fire extinguishing radius of the fire extinguishing UAV and the movement speed of the fire extinguishing UAV relative to the ground can also be determined the time interval of the fire extinguishing object, which can be expressed by the following formula:

$$t = 1.732R/|V|$$

wherein, t can be used to indicate the time interval of the fire extinguishing object, and R can be used to represent the fire extinguishing radius of the effective extinguishing range of the fire extinguishing drone.

Specifically, after determining the placement and time interval of the fire extinguishing object, the fire extinguishing drone can put the fire extinguishing object in the delivery position and according to the delivery interval, so as to achieve complete fire extinguishing in the target area.

Optionally, multiple fire extinguishing drones can be dispatched at the same time to perform multi-route parallel fire extinguishing, which has achieved the effect of efficiently extinguishing fire sources as soon as possible. It can also be manually operated by the operator to achieve artificial control of the placement position and time interval of the fire extinguishing material.

In one embodiment, the fire extinguishing drone detects the remaining amount of fire extinguishing material during the fire extinguishing process; If the remaining amount is less than the preset value, the material supply point will be returned according to the target route to replenish the fire extinguishing materials.

In this scheme, in order to avoid the fire extinguishing UAV from being able to completely extinguish the fire due to insufficient storage of fire extinguishing materials during the fire extinguishing process, the fire extinguishing UAV can detect the remaining amount of fire extinguishing materials in real time during the fire extinguishing process, and when the remaining amount of fire extinguishing materials is detected to be less than the preset value, the target route will return to the material supply point in time to replenish the fire extinguishing materials, so as to achieve efficient fire extinguishing.

In one embodiment, the control of the fire extinguishing drone to the target area for fire extinguishing treatment, comprising: the control of the fire extinguishing drone to the rain agent carried into the cloud of the target area to extinguish the target area by cloud rainfall.

In this scheme, in the actual target area fire extinguishing scene, there may be a situation that the fire in the target area is too large, and the fire extinguishing drone alone cannot completely extinguish the fire, at this time, the fire extinguishing drone can be controlled to put the rain agent carried into the cloud in the target area or near the target area, and the target area can be extinguished through cloud rainfall, so as to improve the success rate and efficiency of fire extinguishing in the target area, and the use cost is low. Optionally, the rainmaker may be a silver iodide rainmaker or other preparations that can be used for rainmaking.

In one embodiment, after controlling the fire extinguishing drone to sail to the target area for fire extinguishing treatment, it further comprises: controlling the fire extinguishing drone to monitor whether there is a fire source residue in the target area; If there is a fire source residue in the target area, the fire extinguishing drone will be controlled to carry out fixed-point fire extinguishing treatment on the area where the fire source remains.

In this scheme, after the fire extinguishing drone extinguishes the target area, in order to avoid the re-ignition or missing fire source in the fire extinguishing area, the fire extinguishing drone carrying the fire extinguishing material can be controlled to re-inspect the target area, and the existing residual fire source can be directly extinguished, so as to improve the success rate of fire extinguishing treatment in the target area.

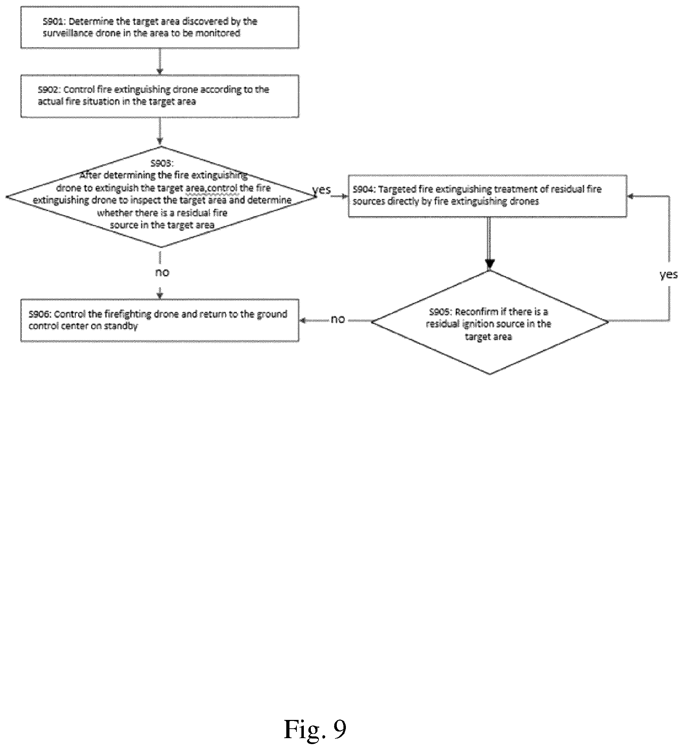

Specifically, the process of determining the target area where the fire exists and carrying out the fire extinguishing treatment may be shown in FIG. 9. FIG. 9 is a flow chart of embodiment II of the fire extinguishing method provided in the embodiment of the present invention. In FIG. 9, the fire extinguishing method may include the following steps:

S901: Determine the target area discovered by the surveillance drone in the area to be monitored.
S902: Control fire extinguishing drone according to the actual fire situation in the target area.
S903: After determining the fire extinguishing drone to extinguish the target area, control the fire extinguishing drone to inspect the target area and determine whether there is a residual fire source in the target area.

In this step, if there is a residual ignition source in the target area, jump to step S904, if there is no residual ignition source in the target area, jump to step S906.

S904: Targeted fire extinguishing treatment of residual fire sources directly by fire extinguishing drones.

S905: Reconfirm if there is a residual ignition source in the target area.

In this step, if there is still a residual ignition source in the target area, jump to step S904, if there is no residual ignition source in the target area, jump to step S906.

S906: Control the firefighting drone to return to the ground monitoring center for standby.

In one embodiment, for some large application scenarios to be monitored area, such as a large forest area or mountainous area, there may only be a ground monitoring center with relatively complete facilities, and the area where other operators are located does not have a complete ground station system, so the remote application (Application, referred to as APP) can be designed to control the monitoring drone or fire extinguishing drone through the remote APP. Compared with the complete ground system, although the remote APP cannot display enough UAV information at one time due to the limitation of screen size, it has strong mobility and adaptability, especially when the operator is sparsely distributed or when the operator is on the spot command, it can play a maximum role, and the remote APP can be used to operate the drone only by applying for the permission of the remote APP to the ground monitoring center.

In one embodiment, in the application scenario of mountainous or forest areas, due to the great undulations in mountainous areas and forest areas, it is likely that the signal link will be blocked, affecting the communication between drones, resulting in the problem of low information communication between drones, therefore, you can also set the flight relay function for the UAV, that is, a small UAV as a communication relay to achieve barrier-free communication between multiple UAVs, the selected relay UAV is light in weight, good in maneuverability, and has strong endurance, It can effectively solve the problem of blocked communication in mountainous areas and forest areas.

The fire extinguishing method provided in the present embodiment, by determining the size of the area to be monitored, determines whether the flight mode of the monitoring drone is mobile flight mode or hovering flight mode, thereby improving the efficiency of monitoring the monitoring area to be monitored; And when the monitoring drone finds a fire in the area to be monitored, the monitoring drone can immediately feedback the location information of the fire, so as to facilitate the fire extinguishing drone to sail to the fire occurrence point for fire extinguishing treatment, therefore, the technical solution of the present invention can be used for efficient fire extinguishing warning and/or fire extinguishing treatment in the monitoring area without setting a watchtower, so that the technical solution of the present invention can be applied to a vast and remote forest area, and does not need to consume too much manpower; It is also suitable for other areas where fire extinguishing warning and/or extinguishing treatment is required.

In general, the technical solution provided by the present invention is a technical solution that can not only improve the efficiency of fire extinguishing in the target area, but also improve the success rate of fire extinguishing in the target area.

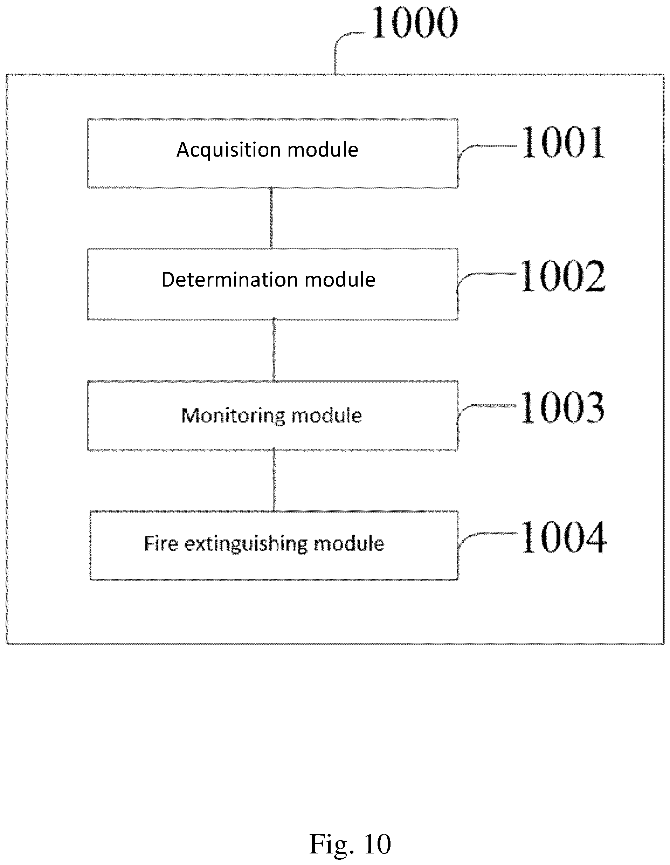

An embodiment of the present invention further provides a fire extinguishing device. FIG. 10 is a schematic view of the structure of the fire extinguishing device provided by an embodiment of the present invention. As shown in FIG. 10, the fire extinguishing device 1000 comprises:

Acquisition module 1001 for obtaining the monitoring area of the area to be monitored;
Determination module 1002, for determining the target flight mode of the monitoring UAV according to the monitoring area, the target flight mode includes a mobile flight mode or a hovering flight mode;
Monitoring module 1003, for controlling the monitoring drone to monitor the monitoring area in the target flight mode, to obtain the alarm information sent by the monitoring drone, the alarm information is used to indicate that the monitoring temperature of the target area is higher than the temperature threshold;
Fire extinguishing module 1004, used to control the fire extinguishing drone to the target area for fire extinguishing treatment according to the location information of the target area.

Optionally, the determination module 1002 determines the target flight mode of the monitoring drone according to the monitoring area, specifically for: if the monitoring area is greater than or equal to the set value, the target flight mode is determined to be mobile flight mode; If the monitoring area is less than the set value, the target flight mode is determined to be hover.

Optional, the target flight mode is hovering flight mode, the monitoring drone in the hover flight mode is multiple, the monitoring module 1003 controls the monitoring drone to monitor the monitoring area in the target flight mode, specifically for: obtaining the monitoring radius of the monitorable range of a plurality of monitoring drones; According to the monitoring radius, determine the hover position of multiple monitoring drones; According to the hover position, multiple monitoring drones are controlled to form a target array so that multiple monitoring drones can monitor the monitoring area.

Optional, the fire extinguishing module 1004 is specifically used for: if the area of the target area is greater than or equal to the area threshold if the area of the target area is greater than or equal to the area threshold, the fire extinguishing route of the fire extinguishing drone in the target area is determined; Control the fire extinguishing drone to extinguish the target area according to the fire extinguishing route; If the area of the target area is less than the area threshold, the control fire extinguishing drone hovers at a fixed point at a preset height to put fire extinguishing materials on the target area.

Optional, the fire extinguishing module 1004 is specifically used to obtain the height of the fire extinguishing drone relative to the ground, the movement speed of the fire extinguishing drone relative to the ground, the current wind speed, and the fire extinguishing radius of the effective fire extinguishing range of the fire extinguishing drone; According to the height, moving speed and current wind speed, determine the placement of the fire extinguishing object; According to the fire extinguishing radius and moving speed, determine the time interval of the fire extinguishing object; According to the fire extinguishing route, delivery location and delivery interval, control the fire extinguishing drone to extinguish the target area.

Optional, the fire extinguishing drone detects the remaining amount of fire extinguishing material during the fire extinguishing process; If the remaining amount is less than the preset value, the material supply point will be returned according to the target route to replenish the fire extinguishing materials.

Optional, the fire extinguishing module 1004 controls the fire extinguishing drone to sail to the target area for fire extinguishing treatment, specifically for: controlling the fire extinguishing drone to put the rain agent carried into the cloud of the target area, so as to extinguish the target area through cloud rainfall.

Optionally, the fire extinguishing device 1000 further comprises a treatment module (not shown), the treatment module is used to control the fire extinguishing drone to monitor the presence of fire source residue in the target area after controlling the fire extinguishing drone to sail to the target area for fire extinguishing treatment; If there is a fire source residue in the target area, the fire extinguishing drone will be controlled to carry out fixed-point fire extinguishing treatment on the area where the fire source remains.

The fire extinguishing device provided in this embodiment is used to implement the technical solution of the fire extinguishing method in the embodiment of the aforementioned method, and its realization principle and technical effect are similar, and will not be repeated herein.

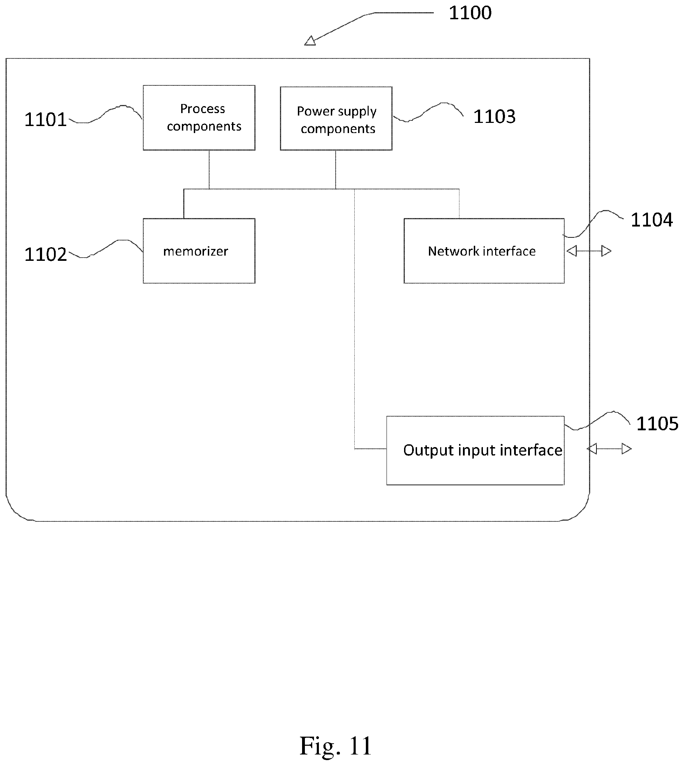

An embodiment of the present invention further provides an electronic device. FIG. 11 is a schematic diagram of the structure of an electronic device provided by an embodiment of the present invention. As shown in FIG. 11, the electronic device 1100 includes a processing component 1101, which further comprises one or more processors, and memory resources represented by memory 1102 for storing computer execution instructions that can be executed by processing component 1101, such as an application program, processing component 1101 may be connected to memory 1102 communication. The application stored in the memory 1102 may include one or more modules each corresponding to a set of instructions. Further, the processing component 1101 is configured to execute instructions to perform the technical scheme of the fire extinguishing method described above.

Electronic equipment 1100 may further include a power component 1103 is configured to perform power management of electronic equipment 1100, a wired or wireless network interface 1104 is configured to connect electronic devices 1100 to the network, and an input-output interface 1105, the input-output interface 1105 may also be referred to as an I/O interface 1105. Electronic device 1100 may operate an operating system based on memory 1102, such as Windows ServerTM, Mac OS XTM, UnixTM, LinuxTM, FreeBSDTM or similar.

Memory can be, but is not limited to, Random Access Memory (RAM), Read Only Memory (ROM), Programmable Read-Only Memory (PROM), Erasable Programmable Read-Only Memory Electric Erasable Programmable Read-Only Memory (EEPROM) and so on. wherein, the memory is used to store the program, and the processor executes the program after receiving the execution instruction. Further, the software program and module in the above memory may also include an operating system, which may include various software components and / or drivers for managing system tasks (e.g., memory management, storage device control, power management, etc.), and may communicate with various hardware or software components to each other, thereby providing an operating environment for other software components.

A processor can be an integrated circuit chip with signal processing power. The above processors can be general-purpose processors, including the Central Processing Unit (CPU), Network Processor (NP) and so on. Various methods, steps and logical block diagrams disclosed in embodiments of the present invention may be implemented or executed. A general-purpose processor can be a microprocessor, or the processor can be any conventional processor, etc.

An embodiment of the present invention further provides a computer-readable storage medium, the computer-readable storage medium is stored with computer execution instructions, and the computer execution instructions are executed by the processor for implementing the fire extinguishing method provided in the aforementioned method embodiment technical solution.

An embodiment of the present invention further provides a computer program product, including a computer program, a computer program is executed by the processor for implementing a technical solution for the fire extinguishing method provided in the aforementioned method embodiment.

Those skilled in the art will easily think of other embodiments of the present invention after considering the description and practice of the invention disclosed herein. The present invention is intended to cover any variant, use, or adaptable variation of the present invention, which follows the general principles of the present invention and includes common knowledge or common knowledge or common art means in the art not disclosed in the present invention. The description and embodiments are considered exemplary only, and the true scope and spirit of the present invention are indicated by the claims of the present invention.

It should be understood that the present invention is not limited to the precise structure described above and shown in the drawings, and may be modified and altered without departing from its scope. The scope of this invention is limited only by the attached claims.

## Claims

1. A fire extinguishing method, **characterized in that**, comprising:

    obtain a monitoring area of an area to be monitored;
    determine a target flight mode of a monitoring drone according to the monitoring area, and the target flight mode includes a mobile flight mode or a hovering flight mode;
    control the monitoring drone to monitor the area to be monitored in the target flight mode to obtain an alarm information sent by the monitoring drone, and the alarm information is used to indicate that a monitoring temperature of a target area is higher than a temperature threshold;
    according to the location information of the target area, a fire extinguishing drone is controlled to sail to the target area for fire extinguishing treatment.

2. The fire extinguishing method according to claim 1, wherein to determine the target flight mode of the monitoring drone according to the monitoring area comprises:

    if the monitoring area is greater than or equal to a set value, the target flight mode is determined to be the mobile flight mode;
    if the monitoring area is less than the set value, the target flight mode is determined to be the hovering flight mode.

3. The fire extinguishing method according to claim 2, wherein the target flight mode is the hovering flight mode, the monitoring drone in the hovering flight mode is a plurality of monitoring drones, and to control the monitoring drone to monitor the area to be monitored in the target flight mode comprises:

    Obtain a monitoring radius of a monitorable range of the plurality of the monitoring drones;
    According to the monitoring radius, determine the hovering position of the plurality of the monitoring drones;
    According to the hovering position, control the plurality of the monitoring drones to form a target array so that the plurality of the monitoring drones monitors the area to be monitored.

4. The fire extinguishing method according to any one of claims 1 to 3, wherein the fire extinguishing drone is controlled to sail to the target area for fire extinguishing treatment comprises:

If the area of the target area is greater than or equal to an area threshold, a fire extinguishing route of the fire extinguishing drone in the target area is determined;
control the fire extinguishing drone to extinguish the target area according to the fire extinguishing route;
If the area of the target area is less than the area threshold, the fire extinguishing drone is controlled to hover at a fixed point at a preset height to put fire extinguishing objects on the target area.

5. The fire extinguishing method according to claim 4, wherein to control the fire extinguishing drone to extinguish the target area according to the fire extinguishing route comprises:

obtain the height of the fire extinguishing drone relative to the ground, the moving speed of the fire extinguishing drone relative to the ground, the current wind speed, and the fire extinguishing radius of the effective fire extinguishing range of the fire extinguishing drone;
According to the height, the moving speed and the current wind speed, determine a placement position of the fire extinguishing object;
According to the fire extinguishing radius and the moving speed, determine a time interval for the release of the fire extinguishing object;
According to the fire extinguishing route, the placement position and the time interval, the fire extinguishing drone is controlled to extinguish the target area.

6. The fire extinguishing method according to claim 4, wherein the fire extinguishing drone detects a remaining amount of fire extinguishing material during the fire extinguishing process; if the remaining amount is less than a preset value, a material supply point will be returned to according to a target route to replenish the fire extinguishing material.

7. The fire extinguishing method according to any one of claims 1 to 3, wherein the fire extinguishing drone is controlled to sail to the target area for fire extinguishing treatment comprises:
control the fire extinguishing drone to put a rain agent carried into a cloud of the target area to extinguish the target area through cloud rainfall.

8. The fire extinguishing method according to any one of claims 1 to 3, wherein the fire extinguishing drone is controlled to sail to the target area for fire extinguishing treatment further comprises:

control the fire extinguishing drone to monitor whether there is a fire source residue in the target area;
if there is a fire source residue in the target area, the fire extinguishing drone is controlled to carry out fixed-point fire extinguishing treatment on the area where the fire source remains.

9. A fire extinguishing device, **characterized in that**, comprising:

An acquisition module to obtain a monitoring area of an area to be monitored;
A determination module for determining a target flight mode of a monitoring drone according to the monitoring area, the target flight mode includes a mobile flight mode or a hovering flight mode;
a monitoring module for controlling the monitoring drone to monitor the area to be monitored in the target flight mode to obtain an alarm information sent by the monitoring drone, and the alarm information is used to indicate that a monitoring temperature of a target area is higher than a temperature threshold;
a fire extinguishing module to control a fire extinguishing drone to sail to the target area for fire extinguishing treatment according to the location information of the target area.

10. An electronic device comprising: a processor, and a memory communicatively connected to the processor;

The memory stores computer-executable instructions;
The processor executes the computer-executable instructions stored in the memory to achieve the fire extinguishing method as claimed 1 to 8.

11. A computer-readable storage medium, wherein the computer-readable storage medium is stored with computer-executable instructions, the computer-executable instructions are executed by a processor for achieving the fire extinguishing method according to any of claims 1 to 8.

12. A computer program product, comprising a computer program, wherein the computer program is executed by a processor for achieving the fire extinguishing method according to any of claims 1 to 8.

Fig. 1

```
┌─────────────────────────────────────────────────────────────┐
│   Obtain the monitored area of the area to be monitored       │──── S201
└─────────────────────────────────────────────────────────────┘
                              │
                              ▼
┌─────────────────────────────────────────────────────────────┐
│      Depending on the monitoring area, the target flight      │──── S202
│          mode of the monitoring drone is determined           │
└─────────────────────────────────────────────────────────────┘
                              │
                              ▼
┌─────────────────────────────────────────────────────────────┐
│  The control monitoring drone monitors the monitoring area    │
│  in the target flight mode to obtain the alarm information     │──── S203
│             sent by the monitoring drone                       │
└─────────────────────────────────────────────────────────────┘
                              │
                              ▼
┌─────────────────────────────────────────────────────────────┐
│  According to the location information of the target area,     │
│  the fire extinguishing drone is controlled to sail to the     │──── S204
│      target area for fire extinguishing treatment              │
└─────────────────────────────────────────────────────────────┘
```

Fig. 2

Fig. 3

Fig. 4

Fig. 5

Fig. 6

Fig. 7

Fig. 8

S901: Determine the target area discovered by the surveillance drone in the area to be monitored

S902: Control fire extinguishing drone according to the actual fire situation in the target area

S903: After determining the fire extinguishing drone to extinguish the target area,control the fire extinguishing drone to inspect the target area and determine whether there is a residual fire source in the target area

yes

S904: Targeted fire extinguishing treatment of residual fire sources directly by fire extinguishing drones

no

S906: Control the firefighting drone and return to the ground control center on standby

no

S905: Reconfirm if there is a residual ignition source in the target area

yes

Fig. 9

1000

Acquisition module — 1001

Determination module — 1002

Monitoring module — 1003

Fire extinguishing module — 1004

Fig. 10

1100

| 1101 | Process components | | Power supply components | | 1103 |

| 1102 | memorizer | | Network interface | | 1104 |

| | | | Output input interface | | 1105 |

Fig. 11

## INTERNATIONAL SEARCH REPORT

| International application No. |
|---|
| **PCT/CN2023/121450** |

| A. | CLASSIFICATION OF SUBJECT MATTER |
|---|---|

G05D1/10(2006.01)i; A62C3/02(2006.01)i; A62C37/50(2006.01)i

According to International Patent Classification (IPC) or to both national classification and IPC

| B. | FIELDS SEARCHED |
|---|---|

Minimum documentation searched (classification system followed by classification symbols)

IPC: G05D A62C

Documentation searched other than minimum documentation to the extent that such documents are included in the fields searched

Electronic data base consulted during the international search (name of data base and, where practicable, search terms used)

CNTXT; CNKI; VEN; WPABS; WPABSC; ENTXT; ENTXTC: 无人机, 飞机, 飞行, 旋翼, 面积, 半径, 大小, 检测, 监测, 侦查, 侦察, 模式, 悬停, 飞行, 换, 改, 变, 调, 选择, 多个, 若干, 阵列, 矩阵, 灭火, 火灾, 消防, unmanned aerial vehicle, UAV, area, fire, monitor+, mode, pattern, array, matrix, chang+, detect+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115826616 A (FENGFEI AVIATION TECHNOLOGY (KUNSHAN) CO., LTD.) 21 March 2023 (2023-03-21)<br>claims 1-12 | 1-12 |
| Y | CN 111445661 A (FENGFEI INTERNATIONAL LTD.) 24 July 2020 (2020-07-24)<br>description, paragraphs [0004]-[0115], and figures 1-5 | 1-12 |
| Y | CN 112799427 A (SHANGLIANG ZHONGYI (SHENYANG) HIGH-NEW TECHNOLOGY CO., LTD.) 14 May 2021 (2021-05-14)<br>description, paragraphs [0005]-[0141], and figures 1-12 | 1-12 |
| Y | CN 112435427 A (OPTICAL VALLEY TECHNOLOGY CO., LTD.) 02 March 2021 (2021-03-02)<br>description, paragraphs [0004]-[0122], and figures 1-4 | 3-8, 10-12 |
| A | CN 112802287 A (ELECTRIC POWER RESEARCH INSTITUTE, GUANGDONG POWER GRID CORP.) 14 May 2021 (2021-05-14)<br>entire document | 1-12 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 November 2023** | **24 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/121450**

| C. | DOCUMENTS CONSIDERED TO BE RELEVANT | |
|---|---|---|
| Category* | Citation of document, with indication, where appropriate, of the relevant passages | Relevant to claim No. |
| A | CN 114404838 A (FOSHAN ZHIYI TECHNOLOGY CO., LTD.) 29 April 2022 (2022-04-29) entire document | 1-12 |

Form PCT/ISA/210 (second sheet) (July 2022)

**INTERNATIONAL SEARCH REPORT**
Information on patent family members

International application No.

**PCT/CN2023/121450**

| Patent document cited in search report | | | Publication date (day/month/year) | Patent family member(s) | Publication date (day/month/year) |
|---|---|---|---|---|---|
| CN | 115826616 | A | 21 March 2023 | None | |
| CN | 111445661 | A | 24 July 2020 | None | |
| CN | 112799427 | A | 14 May 2021 | None | |
| CN | 112435427 | A | 02 March 2021 | None | |
| CN | 112802287 | A | 14 May 2021 | None | |
| CN | 114404838 | A | 29 April 2022 | None | |

Form PCT/ISA/210 (patent family annex) (July 2022)